# EUROPEAN PATENT SPECIFICATION

(11) **EP 3 459 814 B1**
(45) Date of publication and mention of the grant of the patent: **13.04.2022**
(21) Application number: 17192889.8
(22) Date of filing: 25.09.2017
(51) Int. Cl.: B62B 3/00, B60B 33/04, B62B 3/06, B66F 9/075

(54) **STABILIZING SUPPORT WHEEL DEVICE AND AN INDUSTRIAL TRUCK WITH SUCH A SUPPORT WHEEL DEVICE**
STABILISIERENDE STÜTZRADVORRICHTUNG UND FLURFÖRDERFAHRZEUG MIT SOLCH EINER STÜTZRADVORRICHTUNG
DISPOSITIF DE ROUE DE SUPPORT DE STABILISATION ET CHARIOT DE MANUTENTION COMPRENANT UN TEL DISPOSITIF DE ROUE DE SUPPORT

(43) Date of publication of application: 27.03.2019
(73) Proprietor: Mitsubishi Logisnext Europe AB, 435 82 Mölnlycke (SE)
(72) Inventor: Johansson, Daniel, 435 42 Mölnlycke (SE)
(74) Representative: Lind Edlund Kenamets Intellectual Property AB

(56) References cited:
- EP-A2- 1 588 979
- WO-A1-85/05334
- WO-A1-93/25398
- DE-A1-102013 100 073
- US-B2- 8 763 990

## Description

### TECHNICAL FIELD

The present invention relates to a stabilizing, rotating support wheel device for stabilization of an industrial truck, such as a pallet truck, and an industrial truck comprising such a suppport wheel, and in particular a fork-lift truck.

### BACKGROUND OF THE INVENTION

Many pallet trucks and other types of industrial trucks for lifting, lowering and transporting heavy loads have a single drive unit with a drive wheel for driving, steering and braking. Usually, the drive unit is arranged at one end of the industrial truck opposite to the forks. In order to increase ride comfort, reduce component wear and maintain traction, braking and maneuverability, the motor and the drive wheel are often suspended in a manner that allows up and down movement in response to bumps and dips in the floor or the ground.

To improve the stability of such forklift trucks, rotatable support wheels, such as casters, may be arranged as support wheels at a distance from the drive wheel. The support wheels increase lateral stability of the forklift truck.. The support wheels improve the stability of a forklift truck, especially when transporting a load with a high center of gravity.

However, currently available support wheel solutions are not entirely satisfactory.

In many presently known solutions, the support wheels are not suspended, and axially fixed to the chassis of the truck. In such solutions, the stability of the truck is good, but on the other hand, shocks and vibrations of the support wheels, due to uneven floors, door sills, and other objects, will propagate in to the truck and the driver. It is common that a driver is sitting or standing close to the drive wheel and the support wheels, e.g. on a fixed or down-foldable platform, and hence, vibrations from the support wheels will immediately affect the driver. Thus, such vibrations and shocks are uncomfortable or even hazardous for the driver. Further, these vibrations may lead to wear and damages to the truck. Still further, with fixed support wheels it is often difficult to maintain good friction between the drive wheel and the ground as the drive wheel is worn and reduced in diameter.

To this end, there have been provided trucks with suspended support wheels. However, with axially displaceable support wheels, the stability of the truck is greatly diminished, leading to a severe risk of swaying, wobbling and leaning sideways in curves.

There have also been proposals to make the suspension and the axial moveability to some extent dependent on the driving direction of the truck, so that axial moveability is restricted or prohibited when the drive wheel turns. Such solutions are e.g. disclosed in DE 102013100073, US 8763990 and EP 1588979. However, these known solutions are still inefficient in providing a good balance between reducing shocks and vibrations on the one hand and obtaining a good stability on the other. Further, these solutions are very A totally different type of"support wheel" is complex and costly. disclosed in WO 85/05334. Here, a suspended extra wheel is arranged beneath a shopping cart, centrally arranged between the non-suspended casterwheels. The extra wheel is arranged to drop down and be locked in an extended and turned orientation when the front of the shopping cart is lifted, by moving the front wheels over a barrier. In this locked position, the shopping cart will only move in circles, and is difficult to control, which discourages thefts.

Hence, there is still a need for a cost-efficient support wheel device or support wheel device system which reduces shocks and vibrations and provides good stability.

### SUMMARY OF THE INVENTION

It is therefore an object of the present invention to obviate or alleviate the above-discussed problems.

This object is achieved by a stabilizing support wheel device and an industrial truck in accordance with the appended claims.

According to a first aspect of the invention there is provided a stabilizing support wheel device for stabilization of an industrial truck, said device comprising a rotatable part and a mount, said rotatable part comprising a yoke holding a support wheel and a swivel shank connected to said yoke, and said mount comprising a tubular compartment arranged to rotatably receive and hold said shank, wherein said shank is axially displaceable within said mount, the stabilizing support wheel device further comprising a circumferential restriction surface and a protruding abutment, one of said restriction surface and abutment being arranged on the mount and the other on the rotatable part, the restriction surface having a varying height to provide at least some rotational positions where the abutment is relatively closer to the restriction surface, thereby restricting axial movement of the shank, and at least some rotational positions where the abutment is relatively farther away from the restriction surface, thereby allowing more axial movement.

At the rotational positions where the abutment is relatively closer to the restriction surface, i.e. has a relatively shorter distance to the restriction surface, the distance may be so short that the abutment is maintained in contact with the restriction surface. Alternatively, a short gap may still be present allowing some, but greatly restricted, axial movement.

The support wheels are preferably casters, and most preferably swivel casters, which are able to freely rotate around the full circle, thereby being operable in each rotational position. However, other types of rotatable support wheels may also be used, where the rotation is more actively controller. Thanks to the restriction surface and the abutment, the support wheel is only axially moveable in relation to the mount in certain positions.

The restriction surface is arranged not to restrict the axial movement at rotational positions where the support wheel is directed essentially straight forward and/or straight backward, but to restrict the axial movement at at least some, and preferably essentially all, other rotational positions.

Hereby, the support wheels will be suspended and resilient when travelling forwards and backwards, and be fixed and non-resilient when the truck is turning. Thus, the support wheels may have full suspension when moving forwards and backwards, when the risk of swaying and tilting is very low. At the same time, during movement forwards and backwards, the speed is normally higher, and the problem with vibrations and shocks the greatest. Further, the passing of obstacles, such as doorsills, rims of loading ramps and platforms, and the like, normally occurs when moving straight forward or backward. Thus, allowing axial movement and suspension at such periods, and during such movement, is very efficient in reducing the overall exposure to vibrations and shocks. When the truck is turning, the speed is normally lower, and the problems related to vibrations and shocks is less sever, and at the same time, the need for stability is higher. Thus, provision of increase suspension when travelling straight, or close to straight forward and backward, and with less suspension and more stability when turning is very efficient in providing both enhanced overall stability and enhanced overall diminishing of vibrations and shocks.

Further, the distinction between these states is made automatically and entirely mechanically, and consequently, there is no need for complex and costly control systems and the like. Thus, the system is both very robust and reliable, and yet very cost-efficient.

Still further, since the support wheels are normally much smaller than the drive wheel, the support wheels are normally more sensitive for vibrations and shocks. Consequently, the improved reduction of vibrations and shocks from the support wheels is very efficient in reducing the overall exposure to vibrations and shocks in the truck.

The restriction surface is preferably provided with sloped areas providing a gradual transition between rotational positions providing restricted and unrestricted axial movement. This provides a smooth transition between these states, and also ensures that the support wheel is not locked in any position, and is free to rotate even when e.g. being in the unrestricted area and has moved to a displaced position.

For example, the restriction surface may have a generally planar surface at positions where the axial movement is to be restricted, and concavely formed valleys with sloping sides, forming the positions where axial movement is to be allowed. The sloping sides may form cam surfaces.

The abutment may comprise a low friction surface at the side intended to at least occasionally come into contact with the restriction surface. Preferably the abutment comprises a roller, the surface of which is at least occasionally to be in contact with the restriction surface. This lowers the friction between the rotatable part and the mount, and facilitates rotation of the rotatable part.

The restriction surface may be provided on a flange, arranged around an opening of said mount arranged to receive said shank, and wherein the rotatable part comprises the protruding abutment interacting with said flange. The protruding abutment, preferably in the form of a roller, may be arranged on the yoke of the rotatable part.

At least one of a spring and a damper may be provided between the rotatable part and the mount, thereby absorbing and/or dampening vibrations and shocks during axial displacement of the shank in relation to the mount.

The damper may be in the form of a pneumatic or hydraulic shock absorber. The spring is preferably a coil spring, but additionally or alternatively, hydraulic and/or elastomeric springs may be used.

According to another aspect of the invention, there is provided an industrial truck comprising a support wheel device as discussed in the foregoing.

The present invention may be used for various types of trucks. The industrial truck the industrial truck may be a pallet truck. The industrial truck may be maneuvered through a tiller, i.e. a tiller truck. The truck may of the type where the operator walks along the truck during use, i.e. a pedestrian controlled truck. The truck may also be a rider-controlled truck, and the truck may e.g. be provided with a platform where the operator may stand or sit during operation. The platform may be a fixed platform, or a downfoldable platform.

The industrial truck may comprise a four- or five-point chassis.

The support wheel device(s) is (are) arranged so that the at least some rotational positions where the abutment is relatively farther away from the restriction surface, thereby allowing axial movement, include rotational positions where the support wheel is directed in a forward and backward direction of the truck.

The support wheel device(s) may further be arranged so that the at least some rotational positions where the abutment is closer to the restriction surface, thereby restricting axial movement of the shank, include all rotational positions where the support wheel is not directed in a forward and backward direction of the truck, or being offset from such a forward/backward position with less than 20 degrees, and preferably less than 10 degrees, and most preferably less than 5 degrees.

Hereby, it is ensured that the support wheels are suspended and allowed to absorb vibrations and shocks when the truck is driven in a forward or backward direction, or in a direction close to such a direction, when the need for absorption of vibrations and shocks are the greatest. At the same time, the axial movement becomes restricted as soon as the truck turns.

The truck may comprise a main body and two forks extending from said main body, and wherein the main body comprises at least one drive wheel for driving and steering the truck and two support wheel devices of the above-discussed type, arranged laterally from said drive wheel, and wherein each of the forks comprises at least one load wheel.

The support wheel devices are preferably arranged in the vicinity of the lateral sides of the main body. Most preferably, the support wheel devices are arranged close to the corners of the main body being farthest away from the forks.

The drive wheel may further be suspended.

Further embodiments and advantages of the present invention will become apparent from the following detailed description of presently preferred embodiments of the invention.

### BRIEF DESCRIPTION OF THE DRAWINGS

For exemplifying purposes, the invention will be described in closer detail in the following with reference to embodiments thereof illustrated in the attached drawings, wherein:
Fig 1 is a side view in perspective of an industrial truck in accordance with an embodiment of the present invention;
Fig 2 is a schematic view from below of the industrial truck of Fig 1;
Figs 3a-b are detailed views of the support wheel deveice in the industrial truck of Fig 1, wherein Fig 3a is a perspective view from below, and Fig 3b is a perspective view from the side; and
Figs 4a-c are further detailed views of the support wheel device of Fig 3, wherein Fig 4a is a cross-sectional view, Fig 4b is a view from the side and Fig 4c is a view from the front.

### DETAILED DESCRIPTION

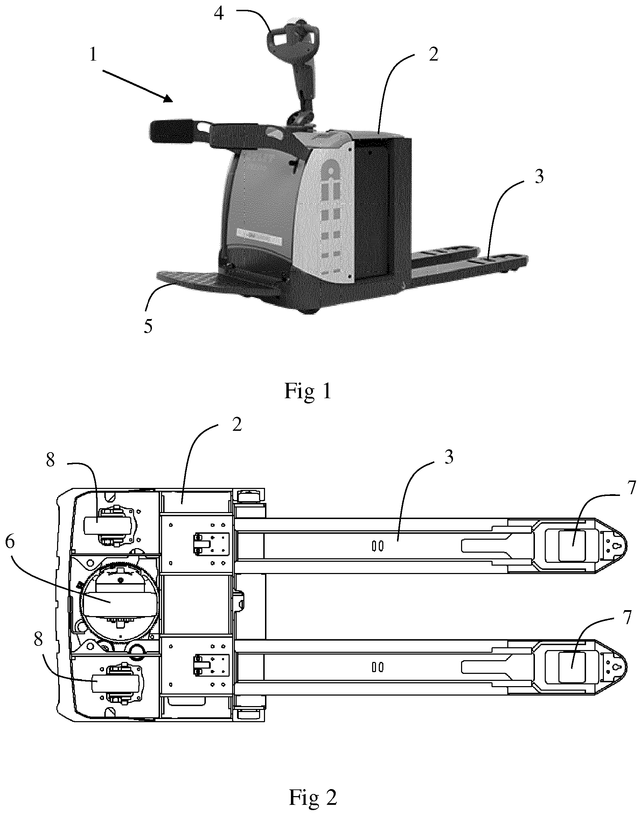

Referring now to Fig. 1, there is shown a perspective view of an industrial fork lift truck 1. The fork lift truck 1 comprises a main body 2 and forks 3 extending from one end of the main body, for carrying and lifting loads.

In this example, the truck is maneuvered through a tiller arm 4 and of the type where the operator walks along the truck during use, i.e. a pedestrian controlled truck. However, the operator may alternatively stand on a downfoldable platform 5 during operation.

However, this specific truck type is only an example, and the present invention may be used in any type of fork lift truck.

As best seen in Fig 2, the truck comprises a drive wheel 6, connected to a drive unit (not shown), e.g. including an electric motor. The drive unit is also connected to the tiller arm 4. The drive wheel is operated, here via the tiller arm, to drive, brake and steer the truck.

In addition to the drive wheel, the truck comprises load wheels 7 arranged on the forks, and preferably close to the ends of the forks being far away from the main body 2. Further, the truck comprises two support wheel devices 8, comprising rotatable parts 81. The support wheel devices are preferably arranged close to the longitudinal sides of the main body, i.e. laterally displaced from the drive wheel, and preferably at or relatively close to the corners of the main body being farthest from the forks.

Thus, the truck is here a pallet truck with a five-point chassis. However, the support wheel devices may also be used in other types of trucks and in other configurations.

The support wheel devices stabilize the truck, and e.g. prevent it from tipping over etc.

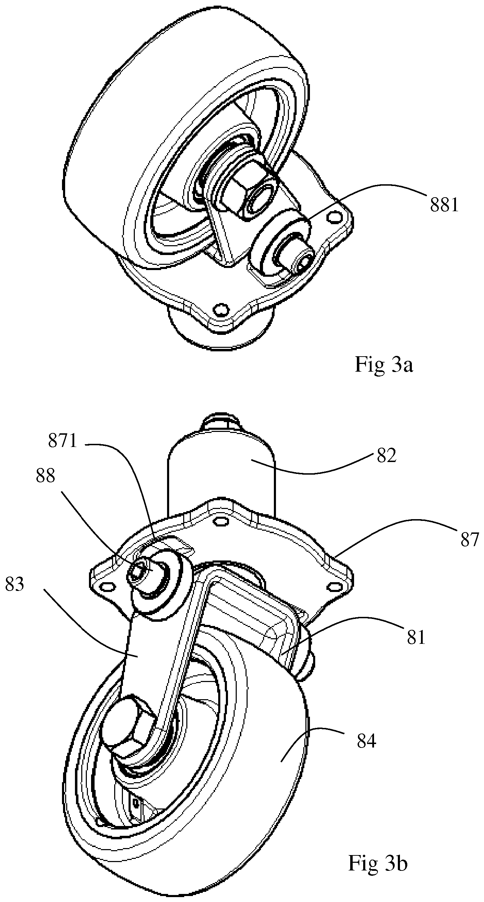

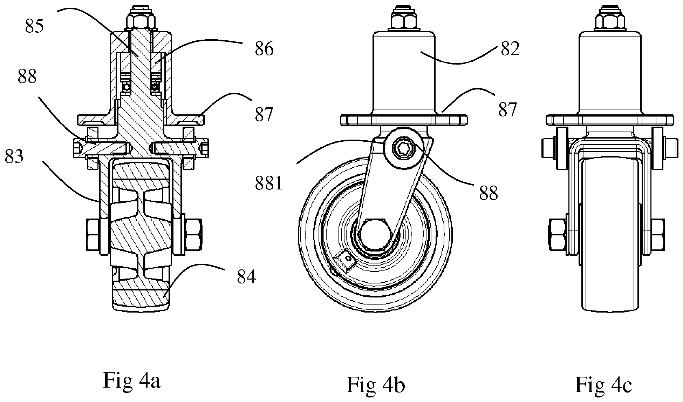

As best seen in Figs. 3a-b and 4a-c, the support wheel device 8 comprises a rotatable part 81 and a mount 82. The rotatable part comprises a yoke 83 holding a support wheel 84 and a swivel shank 85 connected to 83 yoke. The mount 82 comprises a tubular compartment arranged to rotatably receive and hold the shank 85 in such a way that the shank is axially displaceable within the mount 82. The axial displacement is, however limited, to occur only within a predefined range. This range may be a few mm, or even up to one or a few cm. This may be obtained by providing an upper side on the mount, with an opening through which the swivel shaft or an extension connected to the swivel shaft is extending. A protrusion, e.g. in the form of a nut may be arranged above the upper side.

The support wheel is rotatably held by the yoke, e.g. by being arranged on an axle, and may be provided with wheel bearings or the like.

The mount is preferably fixedly arranged in the main body of the truck, and may also for an integral part of the main body.

One or several bushings and/or one or several bearings may also be provided to facilitate rotation of the swivel shank in relation to the mount.

Further, at least one of a damper and a spring 86 may be provided between the rotatable part and the mount, thereby absorbing and/or dampening vibrations and shocks during axial displacement of the shank in relation to the mount. The damper may be in the form of a pneumatic or hydraulic shock absorber. The spring is preferably a coil spring, but additionally or alternatively, hydraulic and/or elastomeric springs may be used. The spring may include energy absorbing characteristics.

The support wheel device further comprises a circumferential restriction surface 87 and a protruding abutment 88. In the exemplary embodiment, the restriction surface 87 is arranged at the lower end of the mount 82, and the protruding abutment 88 is arranged on the upper part of the yoke 83. However, alternative arrangements are also feasible, such as instead arranging the protruding abutment on the mount, and the restriction surface on the rotatable part.

The restriction surface has a varying height to provide at least some rotational positions where the abutment is relatively closer to the restriction surface, or even in constant contact with the restriction surface, thereby restricting axial movement of the shank, and at least some rotational positions where the abutment is relatively farther form the restriction surface, thereby allowing more axial movement. The support wheels are preferably swivel casters, which are able to freely rotate around the full circle, thereby being operable in each rotational position. However, thanks to the restriction surface and the abutment, the support wheel is only axially moveable in relation to the mount in certain positions.

More specifically, the restriction surface is arranged not to restrict the axial movement at rotational positions where the support wheel is directed essentially straight forward and/or straight backward, but to restrict the axial movement at at least some, and preferably essentially all, other rotational positions. Hereby, the support wheels will be suspended and resilient when moving forwards and backwards, and be fixed and non-resilient when the truck is turning. The distinction between these states is made automatically and entirely mechanically.

In the illustrated example, the varying heights of the restriction surface 87 is provided in the form of a generally planar surface in which valleys 871 or channels are formed. The valleys/channels 871 may preferably be concavely shaped, and have sloped areas providing a gradual transition between the center area of the valleys/channels, corresponding to a state in which axial movement of the support wheel should be allowed, and the planar surface, corresponding to states where axial movement should be restricted. This provides a smooth transition between these states, and also ensures that the support wheel is not locked in any position, and is free to rotate even when e.g. being in the unrestricted area and has moved to a displaced position.

The abutment 88 preferably comprises a roller 881, the surface of which is to be, at least occasionally, in contact with the restriction surface. This lowers the friction between the rotatable part and the mount, and facilitates rotation of the rotatable part.

More than one abutment 88 and or channel/valley 871 may be provided. For example, one channel/valley may be arranged on each side of the support wheel device, and one protruding abutment may be arranged on each side as well. Further, more than two abutments and/or channel/valleys may also be used, as long as they are symmetrically distributed around the swivel axis. It is further preferred that the number of valleys/channels is the same or higher than the number of protruding abutments.

Preferably, the valley(s)/channel(s) 871 and the protruding abutment(s) 88 are arranged so that axial movement is allowed when the support wheel is directed in a forward and backward direction of the truck, and not allowed in most other rotational positions. However, axial movement can be allowed in the vicinity of the forward and backward directions, such as rotational positions being offset from a forward/backward position with less than 20 degrees, and preferably less than 10 degrees, and most preferably less than 5 degrees. This may be controlled by adjustment of the width of the valleys/channels and/or the width of the contact surface of the protruding abutment.

As already mentioned, the support wheel device is suitable for use also with other types of industrial trucks than pallet trucks. The support wheel device may for example be used with a forklift truck, a reach truck, a stacker, an order picker or some other type of industrial truck. In particular, the support wheel device is well suited for trucks having a single drive wheel. Further, the restriction surface and the protruding abutment may be realized in other ways, and may e.g. be provided at the other end of the mount, i.e. in the upper part, or be provided in an intermediate part of the mount, between the upper and lower ends. Further, instead of providing the restriction surface on the mount and the protruding abutment on the rotatable part, the opposite arrangement is also feasible. Hereby, the restriction surface may e.g. be provided in the form of a flange protruding out from the swivel shaft, or be provided on an upper surface of the yoke.

Such and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements. Further, a single unit may perform the functions of several means recited in the claims.

## Claims

1. A stabilizing rotatable support wheel device (8) for stabilization of an industrial truck (1), said device comprising a rotatable part (81) and a mount (82), said rotatable part (81) comprising a yoke (83) holding a support wheel (84) and a swivel shank (85) connected to said yoke (83), and said mount (82) comprising a tubular compartment arranged to rotatably receive and hold said shank (85), wherein said shank (85) is axially displaceable within said mount (82), the stabilizing support wheel device (8) further comprising a circumferential restriction surface (87) and a protruding abutment (88), one of said restriction surface (87) and abutment (88) being arranged on the mount (82) and the other on the rotatable part (81), the restriction surface (87) having a varying height to provide at least some rotational positions where the abutment (88) is relatively closer to the restriction surface (87), thereby restricting axial movement of the shank (85), and at least some rotational positions where the abutment (88) is relatively farther away from the restriction surface (87), thereby allowing more axial movement, **characterized in that** the restriction surface (87) is arranged not to restrict the axial movement at rotational positions where the support wheel (84) is directed essentially straight forward and/or straight backward, but to restrict the axial movement at at least some, and preferably essentially all, other rotational positions.

2. The support wheel device of claim 1, wherein the restriction surface (87) is provided with sloped areas providing a gradual transition between rotational positions providing restricted and unrestricted axial movement.

3. The support wheel device of any one of the preceding claims, wherein the abutment (88) comprises a roller which is to be at least occasionally in contact with the restriction surface (87).

4. The support wheel device of any one of the preceding claims, wherein the restriction surface (88) is provided on a flange, arranged around an opening of said mount (82) arranged to receive said shank (85), and wherein the rotatable part (81) comprises the protruding abutment (88) interacting with said flange.

5. The support wheel device of any one of the preceding claims, wherein at least one of a spring (86) and a damper is provided between the rotatable part (81) and the mount (82), thereby absorbing and/or damping vibrations and shocks during axial displacement of the shank (85) in relation to the mount (82).

6. The support wheel device of any one of the preceding claims, wherein the restriction surface (87) has a generally planar surface at positions where the axial movement is to be restricted, and concavely formed valleys (871) with sloping sides, forming the positions where axial movement is to be allowed.

7. An industrial truck (1) comprising a support wheel device (8) according to any of the preceding claims.

8. The industrial truck of claim 7, wherein the industrial truck is a pallet truck.

9. The industrial truck of claim 7 or 8, wherein the industrial truck comprises a four or five-point chassis.

10. The industrial truck of claim 9, wherein the support wheel device (8) is arranged so that said at least some rotational positions where the abutment is relatively closer to the restriction surface, thereby restricting axial movement of the shank, include all rotational positions where the support wheel (84) is not directed in a forward and backward direction of the truck, or being offset from such a forward/backward position with less than 20 degrees, and preferably less than 10 degrees, and most preferably less than 5 degrees.

11. The industrial truck of any one of the claims 7-10 , wherein the truck comprises a main body (2) and a load carrier extending from said main body (2), and wherein the main body (2) comprises at least one drive wheel (6) for driving and steering the truck and at least one support wheel device (8) in accordance with any one of the claims 1-5, arranged laterally from said drive wheel, and wherein the load carrier comprises at least one load wheel (7).

12. The industrial truck of claim 11, wherein the at least one support wheel device (8) is arranged in the vicinity of a lateral side of said main body (2).

13. The industrial truck of claim 11 or 12, wherein the drive wheel (6) is suspended.

## Patentansprüche

1. Stabilisierende drehbare Stützradvorrichtung (8) zum Stabilisieren eines Flurförderzeugs (1), wobei die Vorrichtung ein drehbares Teil (81) und eine Halterung (82) umfasst, wobei das drehbare Teil (81) einen Gabelkopf (83), der ein Stützrad (84) hält, und einen Schwenkschaft (85), der mit dem Gabelkopf (83) verbunden ist, umfasst und wobei die Halterung (82) ein rohrförmiges Fach umfasst, das angeordnet ist, den Schaft (85) drehbar aufzunehmen und zu halten, wobei der Schaft (85) in der Halterung (82) axial verstellbar ist, wobei die stabilisierende Stützradvorrichtung (8) eine Umfangsbegrenzungsfläche (87) und einen vorstehenden Anschlag (88) umfasst, wobei eines der Begrenzungsfläche (87) und des Anschlags (88) an der Halterung (82) und das andere am drehbaren Teil (81) angeordnet ist, wobei die Begrenzungsfläche (87) eine variierende Höhe aufweist, um mindestens einige Drehpositionen, in denen der Anschlag (88) der Begrenzungsfläche (87) relativ näher ist, wodurch eine Axialbewegung des Schafts (85) begrenzt wird, und mindestens einige Drehpositionen, in denen der Anschlag (88) von der Begrenzungsfläche (87) relativ weiter entfernt ist, wodurch eine weitere Axialbewegung erlaubt wird, bereitzustellen, **dadurch gekennzeichnet, dass** die Begrenzungsfläche (87) angeordnet ist, die Axialbewegung in Drehpositionen, in denen das Stützrad (84) im Wesentlichen gerade nach vorn und/oder gerade nach hinten gerichtet ist, nicht zu begrenzen, aber die Axialbewegung in mindestens einigen und bevorzugt im Wesentlichen allen anderen Drehpositionen zu begrenzen.

2. Stützradvorrichtung nach Anspruch 1, wobei die Begrenzungsfläche (87) mit geneigten Bereichen versehen ist, die einen allmählichen Übergang zwischen Drehpositionen bereitstellen, die eine begrenzte und eine unbegrenzte Axialbewegung bereitstellen.

3. Stützradvorrichtung nach einem der vorhergehenden Ansprüche, wobei der Anschlag (88) eine Rolle umfasst, die mindestens gelegentlich mit der Begrenzungsfläche (87) in Kontakt sein muss.

4. Stützradvorrichtung nach einem der vorhergehenden Ansprüche, wobei die Begrenzungsfläche (88) mit einem Flansch versehen ist, der um eine Öffnung der Halterung (82), die angeordnet ist, den Schaft (85) aufzunehmen, angeordnet ist, und wobei das drehbare Teil (81) den vorstehenden Anschlag (88), der mit dem Flansch interagiert, umfasst.

5. Stützradvorrichtung nach einem der vorhergehenden Ansprüche, wobei mindestens eines von einer Feder (86) und einem Dämpfer zwischen dem drehbaren Teil (81) und der Halterung (82) bereitgestellt ist, wodurch Vibrationen und Stöße während einer axialen Verstellung des Schafts (85) mit Bezug auf die Halterung (82) absorbiert und/oder gedämpft werden.

6. Stützradvorrichtung nach einem der vorhergehenden Ansprüche, wobei die Begrenzungsfläche (87) in Positionen, in denen die Axialbewegung zu begrenzen ist, eine im Allgemeinen planare Fläche sowie konkav gebildete Vertiefungen (871) mit geneigten Seiten, die die Positionen bilden, in denen eine Axialbewegung zuzulassen ist, aufweist.

7. Flurförderzeug (1), das eine Stützradvorrichtung (8) nach einem der vorhergehenden Ansprüche umfasst.

8. Flurförderzeug nach Anspruch 7, wobei das Flurförderzeug ein Gabelhubwagen ist.

9. Flurförderzeug nach Anspruch 7 oder 8, wobei das Flurförderzeug ein Vier- oder Fünfpunktchassis umfasst.

10. Flurförderzeug nach Anspruch 9, wobei die Stützradvorrichtung (8) derart angeordnet ist, dass die mindestens einigen Drehpositionen, in denen der Anschlag der Begrenzungsfläche relativ näher ist, wodurch eine Axialbewegung des Schafts begrenzt wird, alle Drehpositionen beinhalten, in denen das Stützrad (84) nicht in eine Vorwärts- und Rückwärtsrichtung des Fahrzeugs gerichtet ist, oder die aus einer derartigen Vorwärts-/Rückwärtsposition um weniger als 20 Grad und bevorzugt weniger als 10 Grad und am bevorzugtesten weniger als 5 Grad versetzt sind.

11. Flurförderzeug nach einem der Ansprüche 7-10, wobei das Fahrzeug einen Hauptkörper (2) und einen Lastträger, der sich vom Hauptkörper (2) erstreckt, umfasst und wobei der Hauptkörper (2) mindestens ein Antriebsrad (6) zum Antreiben und Lenken des Fahrzeugs und mindestens eine Stützradvorrichtung (8) gemäß einem der Ansprüche 1-5, die seitlich vom Antriebsrad angeordnet ist, umfasst und wobei der Lastträger mindestens ein Lastrad (7) umfasst.

12. Flurförderzeug nach Anspruch 11, wobei die mindestens eine Stützradvorrichtung (8) in der Nähe einer seitlichen Seite des Hauptkörpers (2) angeordnet ist.

13. Flurförderzeug nach Anspruch 11 oder 12, wobei das Antriebsrad (6) aufgehängt ist.

## Revendications

1. Dispositif à roue de support rotative stabilisatrice (8) pour la stabilisation d'un chariot de manutention (1), ledit dispositif comprenant une partie rotative (81) et une monture (82), ladite pièce rotative (81) comprenant une chape (83) maintenant une roue de support (84) et une tige pivotante (85) raccordée à ladite chape (83), et ladite monture (82) comprenant un compartiment tubulaire agencé pour recevoir et maintenir en rotation ladite tige (85), dans lequel ladite tige (85) est déplaçable axialement à l'intérieur dudit support (82), le dispositif à roue de support stabilisatrice (8) comprenant en outre une surface de restriction circonférentielle (87) et une butée saillante (88), l'une desdites surface de restriction (87) et butée (88) étant disposée sur la monture (82) et l'autre sur la partie rotative (81), la surface de restriction (87) ayant une hauteur variable pour fournir au moins certaines positions de rotation où la butée (88) est relativement plus proche de la surface de restriction (87), en limitant ainsi le mouvement axial de la tige (85), et au moins certaines positions de rotation où la butée (88) est relativement plus éloignée de la surface de restriction (87), permettant ainsi un mouvement plus axial, **caractérisé en ce que** la surface de restriction (87) est agencée pour ne pas restreindre le mouvement axial à des positions de rotation où la roue de support (84) est dirigée essentiellement droit vers l'avant et/ou droit vers l'arrière, mais pour restreindre le mouvement axial à au moins certaines, et de préférence essentiellement toutes, les autres positions de rotation.

2. Dispositif à roue de support selon la revendication 1, dans lequel la surface de restriction (87) est pourvue de zones inclinées fournissant une transition progressive entre des positions de rotation fournissant un mouvement axial restreint et non restreint.

3. Dispositif à roue de support selon une quelconque des revendications précédentes, dans lequel la butée (88) comprend un galet qui doit être au moins occasionnellement en contact avec la surface de restriction (87).

4. Dispositif à roue de support selon une quelconque des revendications précédentes, dans lequel la surface de restriction (88) est prévue sur une bride, agencée autour d'une ouverture dudit support (82) agencée pour recevoir ladite tige (85), et dans laquelle la partie rotative (81) comprend la butée saillante (88) coopérant avec ladite bride.

5. Dispositif à roue de support selon une quelconque des revendications précédentes, dans lequel au moins l'un d'un ressort (86) et d'un amortisseur est prévu entre la partie rotative (81) et la monture (82), absorbant et/ou amortissant ainsi les vibrations et les chocs lors du déplacement axial de la tige (85) par rapport à la monture (82).

6. Dispositif à roue de support selon une quelconque des revendications précédentes, dans lequel la surface de restriction (87) possède une surface généralement plane à des positions où le mouvement axial doit être limité, et des vallées formées de manière concave (871) avec des côtés inclinés, formant les positions où le mouvement axial doit être autorisé.

7. Chariot de manutention (1) comprenant un dispositif à roue de support (8) selon une quelconque des revendications précédentes.

8. Chariot de manutention selon la revendication 7, dans lequel le chariot de manutention est un transpalette.

9. Chariot de manutention selon la revendication 7 ou 8, dans lequel le chariot de manutention comprend un châssis à quatre ou cinq points.

10. Chariot de manutention selon la revendication 9, dans lequel le dispositif à roue de support (8) est agencé de sorte que lesdites au moins certaines positions de rotation où la butée est relativement plus proche de la surface de restriction, en limitant ainsi le mouvement axial de la tige, comprennent toutes les positions de rotation où la roue de support (84) n'est pas dirigée vers l'avant et vers l'arrière du camion, ou étant décalée d'une telle position avant/arrière de moins de 20 degrés, et de préférence moins de 10 degrés, et le plus préférablement moins de 5 degrés.

11. Chariot de manutention selon une quelconque des revendications 7-10, dans lequel le chariot comprend un corps principal (2) et un porte-charge s'étendant depuis ledit corps principal (2), et dans lequel le corps principal (2) comprend au moins une roue motrice (6) pour entraîner et diriger le camion et au moins un dispositif à roue de support (8) selon une quelconque des revendications 1 à 5, agencé latéralement par rapport à ladite roue motrice, et dans lequel le porte-charge comprend au moins une roue porteuse (7).

12. Chariot industriel selon la revendication 11, dans lequel le au moins un dispositif à roue de support (8) est agencé au voisinage d'un côté latéral dudit corps principal (2).

13. Chariot de manutention selon la revendication 11 ou 12, dans lequel la roue motrice (6) est suspendue.
